# EUROPEAN PATENT APPLICATION

(11) **EP 4 769 893 A1**
(43) Date of publication of application: **01.07.2026**
(21) Application number: 25223017.2
(22) Date of filing: 12.12.2025
(51) Int. Cl.: H02J 7/40, H02J 7/00, H02J 7/80, H02J 9/06

(54) **BATTERY CHEMISTRY IDENTIFICATION**

(30) Priority: 31.12.2024 IN 202411104973; 13.02.2025 US 202519052893
(71) Applicant: Schneider Electric IT Corporation, Foxboro, MA 02035 (US)
(72) Inventor: BALUSU, Udayakiran, Bangalore (IN); PULAKHANDAM, Venkatesh, Bangalore (IN); KUKUNURI, Naga Venkat Satya Sivamani Sudhakar, Bangalore (IN); NAGABHUSHANRAO, Pradeep Tolakanahalli, Bangalore (IN)
(74) Representative: Lavoix

(57) **Abstract**

Examples of the disclosure include an uninterruptible power supply (UPS) system (100) comprising at least one energy-storage-device interface (110) configured to be coupled to a plurality of batteries (204a-204b), battery-identification circuitry (208a-208c) configured to be coupled to the plurality of batteries (204a-204b), the battery-identification circuitry (208a-208c) being further configured to receive a plurality of output signals from the plurality of batteries (204a-204b), determine energy-storage-device information indicative of at least one battery type of the plurality of batteries based on the plurality of output signals (210a-210-c) received from the plurality of batteries (204a-204b), and output the energy-storage-device information (212a-212-c), and processing circuitry (206) configured to receive the energy-storage-device information, and select a battery profile indicative of one or more battery parameters based on the energy-storage-device information.

## Description

### BACKGROUND

### CROSS-REFERENCE TO RELATED APPLICATIONS

This application claims priority under 35 U.S.C. § 119(a) to Indian Provisional Application No. 202411104973, titled "BATTERY CHEMISTRY IDENTIFICATION," filed December 31, 2024, which is incorporated herein by reference in its entirety for all purposes.

### 1. Field of the Disclosure

At least one example in accordance with the present disclosure relates generally to power supplies.

### 2. Discussion of Related Art

Power devices, such as uninterruptible power supplies (UPSs), may be used to provide regulated, uninterrupted power for sensitive and/or critical loads, such as computer systems and other data-processing systems. Examples of UPSs include online UPSs, offline UPSs, line-interactive UPSs, as well as others. UPSs may provide output power to a load. The output power may be derived from a primary source of power, such as a utility-mains source, and/or derived from a back-up source of power, such as an energy-storage device.

### SUMMARY

Examples of the methods and systems discussed herein are not limited in application to the details of construction and the arrangement of components set forth in the following description or illustrated in the accompanying drawings. The methods and systems may be capable of implementation in other embodiments and of being practiced or of being carried out in various ways. Examples of specific implementations are provided herein for illustrative purposes and are not intended to be limiting. Acts, components, elements, and features discussed in connection with any one or more examples may be configured to operate and/or be implemented in a similar role in any other examples.

The phraseology and terminology used herein is for the purpose of description. References to examples, embodiments, components, elements, or acts of the systems and methods herein referred to in the singular may also embrace embodiments including a plurality. Similarly, references in plural to embodiments, components, elements, or acts may be implemented as a singularity. References in the singular or plural form may therefore not be intended to limit the presently disclosed systems or methods, their components, acts, or elements. The use herein of "including," "comprising," "having," "containing," "involving," and variations so forth, may encompass the items listed thereafter and equivalents thereof as well as additional items.

References to "or" may be construed as inclusive so that any terms described using "or" may indicate any of a single, more than one, and all of the described terms. For example, the phrase "at least one of A or B" may refer A and/or B-that is, A only, B only, or A and B together. In addition, in the event of inconsistent usages of terms between this document and documents incorporated herein by reference, the term usage in the incorporated documents is supplementary to this document. For irreconcilable differences, the term usage in this document controls.

According to at least one aspect of the present disclosure, an uninterruptible power supply (UPS) system is provided comprising at least one energy-storage-device interface configured to be coupled to a plurality of batteries, battery-identification circuitry configured to be coupled to the plurality of batteries, the battery-identification circuitry being further configured to receive a plurality of output signals from the plurality of batteries, determine energy-storage-device information indicative of at least one battery type of the plurality of batteries based on the plurality of output signals received from the plurality of batteries, and output the energy-storage-device information, and processing circuitry configured to receive the energy-storage-device information, and select a battery profile indicative of one or more battery parameters based on the energy-storage-device information.

In at least one example, the at least one battery type includes a plurality of battery types. In at least one example, the plurality of battery types includes lithium-ion batteries and valve-regulated lead-acid batteries. In at least one example, the processing circuitry is further configured to control the UPS to suspend charging and discharging the plurality of batteries responsive to determining that the at least one battery type includes the plurality of battery types. In at least one example, the processing circuitry is further configured to determine, based on the energy-storage-device information, that the plurality of batteries includes only a single battery type, and control the UPS to charge and/or discharge the plurality of batteries responsive to determining that the plurality of batteries includes only the single battery type.

In at least one example, the processing circuitry is configured to control the UPS to charge and/or discharge the plurality of batteries based on the one or more battery parameters. In at least one example, the one or more battery parameters include one or more of a battery charging profile, a rated discharge power, or a rated low-battery cutoff voltage. In at least one example, the energy-storage-device information is indicative of a respective capacity of each battery of the plurality of batteries. In at least one example, the plurality of batteries include a plurality of different capacities. In at least one example, the processing circuitry is further configured to select the battery profile corresponding to a lowest-capacity battery of the plurality of batteries, and control the UPS to charge and/or discharge the plurality of batteries based on the selected battery profile.

In at least one example, the battery-identification circuitry includes a plurality of battery-identification circuits. In at least one example, each battery-identification circuit is coupled to a plurality of configuration resistors in the plurality of batteries. In at least one example, each battery-identification circuit is configured to output an output signal of the plurality of output signals indicative of resistance values of the plurality of configuration resistors. In at least one example, the processing circuitry is configured to determine the at least one battery type based on the plurality of output signals.

According to at least one example of the disclosure, at least one non-transitory computer-readable medium storing thereon sequences of computer-executable instructions for controlling an uninterruptible power supply (UPS) configured to be coupled to a plurality of batteries is provided, the sequences of computer-executable instructions including instructions that instruct at least one processor to receive a plurality of output signals from the plurality of batteries, determine energy-storage-device information indicative of at least one battery type of the plurality of batteries based on the plurality of output signals received from the plurality of batteries, and select a battery profile indicative of one or more battery parameters based on the energy-storage-device information.

In at least one example, the at least one battery type includes a plurality of battery types. In at least one example, the instructions further instruct the at least one processor to suspend charging and discharging the plurality of batteries responsive to determining that the at least one battery type includes the plurality of battery types. In at least one example, the energy-storage-device information is indicative of a respective capacity of each battery of the plurality of batteries.

According to at least one example of the disclosure, a method of controlling an uninterruptible power supply (UPS) configured to be coupled to a plurality of batteries is provided, the method comprising receiving a plurality of output signals from the plurality of batteries, determining energy-storage-device information indicative of at least one battery type of the plurality of batteries based on the plurality of output signals received from the plurality of batteries, and selecting a battery profile indicative of one or more battery parameters based on the energy-storage-device information.

In at least one example, the at least one battery type includes a plurality of battery types, the method further comprising suspending charging and discharging the plurality of batteries responsive to determining that the at least one battery type includes the plurality of battery types.

### BRIEF DESCRIPTION OF THE DRAWINGS

Various aspects of at least one embodiment are discussed below with reference to the accompanying figures, which may not be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or substantially similar component that is illustrated in various figures may be represented by a like numeral. For purposes of clarity, not every component may be labeled in every figure. In the figures:
FIG. 1 illustrates a block diagram of an uninterruptible power supply (UPS) according to an example;
FIG. 2 illustrates a block diagram of a battery-identification system according to an example;
FIG. 3 illustrates a schematic diagram of an example of the battery-identification system of FIG. 2; and
FIG. 4 illustrates a process of interfacing with a group of energy-storage devices according to an example.

### DETAILED DESCRIPTION

As discussed above, power devices such as uninterruptible power supplies (UPSs) may draw power from energy-storage devices, such as batteries. Many different types of batteries exist, such as valve regulated lead-acid (VLRA) batteries, lithium-ion batteries, nickel-cadmium batteries, nickel-metal hydride batteries, and so forth. In some UPSs, a physical interface to connect a battery to the UPS may be the same for different types of batteries. For example, the physical interface to connect the UPS to a lithium-ion battery may be the same as the physical interface to connect the UPS to a VLRA battery.

Power devices may interact with different batteries in different ways. For example, a power device may associate each battery type with a different set of battery parameters dictated by a battery profile. Battery parameters dictate various aspects of interaction between the power device and a given battery, such as a battery charging profile (which may be indicative of a charging current and charging voltage), a rated discharge power, a rated low-battery cutoff voltage, communication-protocol information, runtime prediction, state-of-charge (SoC) estimation parameters (that is, parameters which may be used to estimate the SoC based on input parameters, such as a voltage and/or charge), state-of-health (SoH) estimation parameters (that is, parameters which may be used to estimate the SoH based on input parameters, such as a voltage and/or charge), and so forth.

In some examples, a power device may be connected to multiple different batteries. If multiple batteries of the same type are connected to the power device, the power device may interact with the batteries using the battery profile for that battery type. However, challenges may arise if batteries of different types are connected to the same power device, because the different battery types may have different battery parameters. For example, VLRA batteries and lithium-ion batteries may have different battery parameters. Accordingly, if one or more VLRA batteries and one or more lithium-ion batteries are connected to a power device, the power device may interact with the batteries using the VLRA battery parameters, or the lithium-ion battery parameters, but not both. It may not be feasible for a UPS to exchange power with (that is, charge and/or discharge) a VLRA battery using a battery profile for a lithium-ion battery, and vice versa.

Furthermore, even if multiple batteries of the same type are connected to a power device, the batteries may have different storage capacities. For example, a power device may be connected to a VLRA battery having one storage capacity (for example, 7.5 Ah) and another VLRA battery having another storage capacity (for example, 9 Ah). Selecting the battery parameters for the higher-capacity battery may lead to challenges, such as overcharging the lower-capacity battery beyond its rated charge capacity.

Examples of the disclosure provide a power device, such as a UPS, configured to determine a type and capacity of the energy-storage devices (such as batteries) connected to the power device. Energy-storage devices may be implemented with a combination of low- and high-resistance configuration resistors. Each combination of low- and high-resistance configuration resistors may correspond to a binary configuration setting for the battery. In some examples, each combination of type and capacity may correspond to a specific combination of low- and high-resistance resistors. For example, a battery of one type may have a different combination of resistors than a battery of another type, and a battery of one type and capacity may have a different combination of resistors than a battery of the same type but a different capacity.

The power device may determine what combination of battery types and capacities is connected to the power device and take action accordingly. For example, if the power device is coupled to multiple batteries all of the same type and capacity, the power device may select a battery profile for that battery type and capacity. If the power device is coupled to multiple different types of batteries, the power device may discontinue drawing power from, and providing power to, the batteries. If the power device is connected to multiple batteries of the same type but different capacities, the power device may select a battery profile for the lowest-capacity battery. While higher-capacity batteries may not be fully charged in this arrangement, a situation may be avoided in which lower-capacity batteries are charged past their rated capacities. Accordingly, examples of the disclosure enable a power device to determine what type and capacity of batteries are connected to the power device and interface with the batteries accordingly.

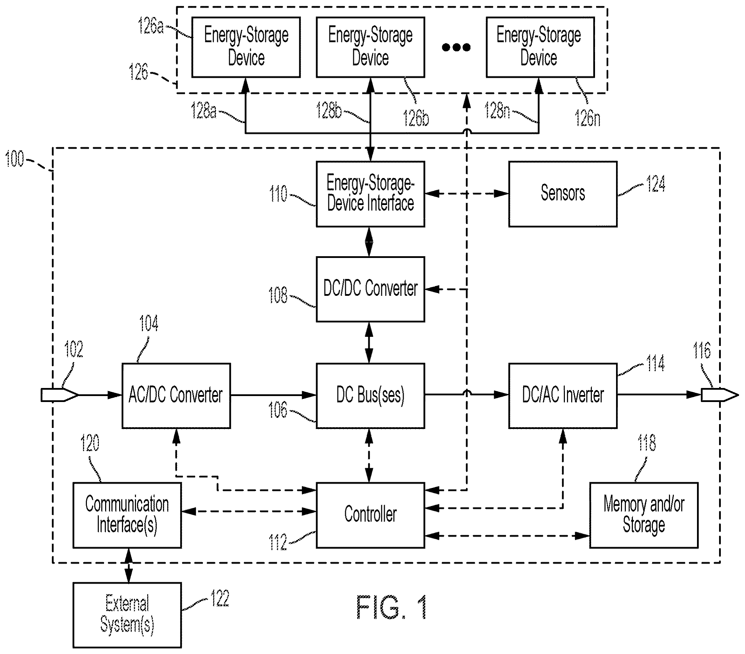

FIG. 1 is a block diagram of a UPS 100 according to an example. The UPS 100 includes an input 102, an AC/DC converter 104, one or more DC busses 106, a DC/DC converter 108, an energy-storage-device interface 110, at least one controller 112 ("controller 112"), a DC/AC inverter 114, an output 116, a memory and/or storage 118, one or more communication interfaces 120 ("communication interfaces 120"), which may be communicatively coupled to one or more external systems 122 ("external systems 122"), and one or more sensors 124 ("sensors 124"), which may include sensors such as voltage sensors, current sensors, temperature sensors, and/or other sensors.

The input 102 is coupled to the AC/DC converter 104 and is configured to be coupled to an AC power source (not illustrated), such as an AC mains power supply. The AC/DC converter 104 is coupled to the input 102 and to the one or more DC busses 106, and is communicatively coupled to the controller 112. The one or more DC busses 106 are coupled to the AC/DC converter 104, the DC/DC converter 108, and to the DC/AC inverter 114. The DC/DC converter 108 is coupled to the one or more DC busses 106 and to the energy-storage-device interface 110, and is communicatively coupled to the controller 112. The energy-storage-device interface 110 is coupled to the DC/DC converter 108, and is configured to be coupled to an arbitrary number of at least one energy-storage device 126 (arbitrarily illustrated as including a first energy-storage device 126a, a second energy-storage device 126b, and an nth energy-storage device 126n) via a corresponding number of energy-storage-device connections 128a, 128b, 128n. In some examples, the energy-storage-device interface 110 is configured to be communicatively coupled to the controller 112.

In some examples, the UPS 100 may be external to the at least one energy-storage device 126 and may be coupled to the at least one energy-storage device 126 via the energy-storage-device interface 110 and the energy-storage-device connections 128a, 128b, 128n. In various examples, the UPS 100 may include one or more energy-storage devices, which may include the at least one energy-storage device 126. The at least one energy-storage device 126 may include one or more batteries, capacitors, flywheels, or other energy-storage devices in various examples.

The DC/AC inverter 114 is coupled to the one or more DC busses 106 and to the output 116, and is communicatively coupled to the controller 112. The output 116 is coupled to the DC/AC inverter 114, and is configured to be coupled to an external load (not pictured). The controller 112 is communicatively coupled to the AC/DC converter 104, the one or more DC busses 106, the DC/DC converter 108, the energy-storage-device interface 110, the DC/AC inverter 114, the memory and/or storage 118, the communication interfaces 120, and/or the at least one energy-storage device 126. The sensors 124 are communicatively coupled to the controller 112 and may be coupled to one or more other components of the UPS 100, such as the input 102, the AC/DC converter 104, the one or more DC busses 106, the DC/DC converter 108, the energy-storage-device interface 110, the DC/AC inverter 114, and/or the output 116.

The input 102 is configured to be coupled to an AC mains power source and to receive input AC power having an input voltage level. The UPS 100 is configured to operate in different modes of operation based on the input voltage of the AC power provided to the input 102. The controller 112 may determine a mode of operation in which to operate the UPS 100 based on whether the input voltage of the AC power is acceptable. The controller 112 may include or be coupled to one or more sensors, such as the sensors 124, configured to sense parameters of the input voltage. For example, the sensors 124 may include one or more voltage and/or current sensors coupled to the input 102 and being configured to sense information indicative of a voltage at the input 102 and provide the sensed information to the controller 112.

When AC power provided to the input 102 is acceptable (for example, by having parameters, such as an input voltage value, that meet specified values, such as by falling within a range of acceptable input voltage values), the controller 112 controls components of the UPS 100 to operate in a normal mode of operation. In the normal mode of operation, AC power received at the input 102 is provided to the AC/DC converter 104. The AC/DC converter 104 converts the AC power into DC power and provides the DC power to the one or more DC busses 106. The one or more DC busses 106 distribute the DC power to the DC/DC converter 108 and to the DC/AC inverter 114. The DC/DC converter 108 converts the received DC power and provides the converted DC power to the energy-storage-device interface 110. The energy-storage-device interface 110 receives the converted DC power, and provides the converted DC power to the at least one energy-storage device 126 to charge the at least one energy-storage device 126. The UPS 100 may charge the energy-storage device 126 pursuant to one or more battery parameters which dictate settings such as maximum charging capacity, charge current, charge voltage, and so forth. The DC/AC inverter 114 receives DC power from the one or more DC busses 106, converts the DC power into regulated AC power, and provides the regulated AC power to the output 116 to be delivered to a load.

When AC power provided to the input 102 from the AC mains power source is not acceptable (for example, by having parameters, such as an input voltage value, that do not meet specified values, such as by falling outside of a range of acceptable input voltage values), the controller 112 controls components of the UPS 100 to operate in a backup mode of operation. In the backup mode of operation, DC power is discharged from the at least one energy-storage device 126 to the energy-storage-device interface 110, and the energy-storage-device interface 110 provides the discharged DC power to the DC/DC converter 108. The UPS 100 may draw power from the energy-storage device 126 pursuant to one or more battery parameters which may dictate settings such as low-battery cutoff voltage, discharge current, discharge voltage, and so forth. The DC/DC converter 108 converts the received DC power and distributes the DC power amongst the one or more DC busses 106. For example, the DC/DC converter 108 may evenly distribute the power amongst the one or more DC busses 106. The one or more DC busses 106 provide the received power to the DC/AC inverter 114. The DC/AC inverter 114 receives the DC power from the one or more DC busses 106, converts the DC power into regulated AC power, and provides the regulated AC power to the output 116.

In some examples, the sensors 124 may include one or more sensors coupled to one or more of the components of the UPS 100 such that a voltage and/or current of one or more of the components may be determined by the controller 112. The controller 112 may store information in, and/or retrieve information from, the memory and/or storage 118. For example, the controller 112 may store information indicative of sensed parameters (for example, input-voltage values of the AC power received at the input 102) in the memory and/or storage 118. The memory and/or storage 118 may also store battery parameter information. For example, the memory and/or storage may store battery profiles (each being indicative of a set of one or more battery parameters) for each of various types and capacities of batteries, such as a first battery profile for a lithium-ion battery, a second battery profile for a 7.5 Ah-capacity VLRA battery, a third battery profile for a 9 Ah-capacity VLRA battery, and so forth.

The controller 112 may further receive information from, or provide information to, the communication interfaces 120. The communication interfaces 120 may include one or more communication interfaces including, for example, user interfaces (such as display screens, touch-sensitive screens, keyboards, mice, track pads, dials, buttons, switches, sliders, light-emitting components such as light-emitting diodes, sound-emitting components such as speakers, buzzers, and so forth configured to output sound inside and/or outside of a frequency range audible to humans, and so forth), wired communication interfaces (such as wired ports), wireless communication interfaces (such as antennas), and so forth, configured to exchange information with one or more systems, such as the external systems 122, or other entities, such as human beings. The external systems 122 may include any device, component, module, and so forth, that is external to the UPS 100, such as a server, database, laptop computer, desktop computer, tablet computer, smartphone, central controller or data-aggregation system, other UPSs, and so forth.

In at least one example, the UPS 100 and/or the at least one energy-storage device 126 may include one or more components that enable the UPS 100 to determine a battery type and capacity of batteries included in the at least one energy-storage device 126. For example, the UPS 100 may determine a battery type and capacity of each of the energy-storage devices 126a, 126b, 126n using battery-identification circuitry.

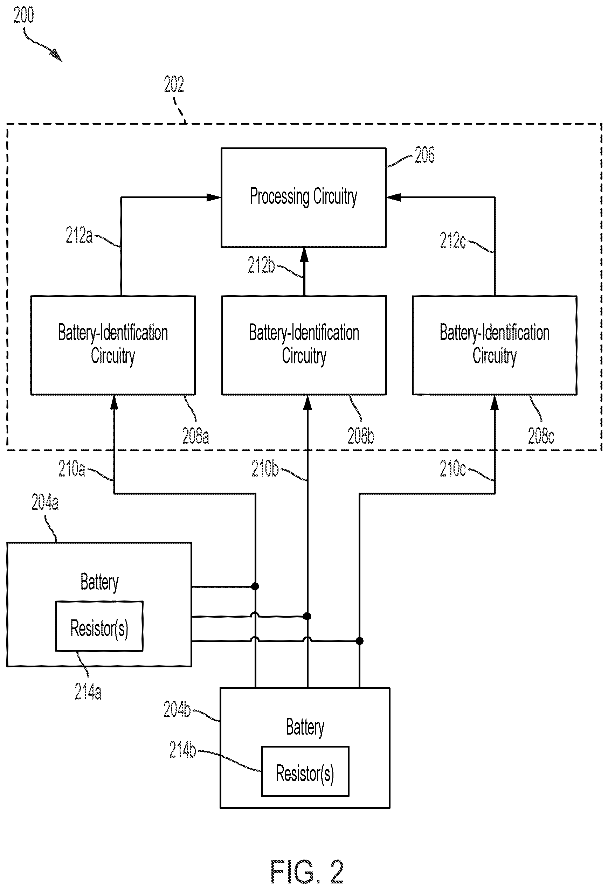

FIG. 2 illustrates a block diagram of a battery-identification system 200 according to an example. The battery-identification system 200 may be implemented in a UPS system, such as the example illustrated in FIG. 1. The battery-identification system 200 includes control circuitry 202, a first battery 204a, and a second battery 204b. The control circuitry 202 may be an example of at least a portion of circuitry of the controller 112. Each of the batteries 204a, 204b may be examples of any of the energy-storage devices 126.

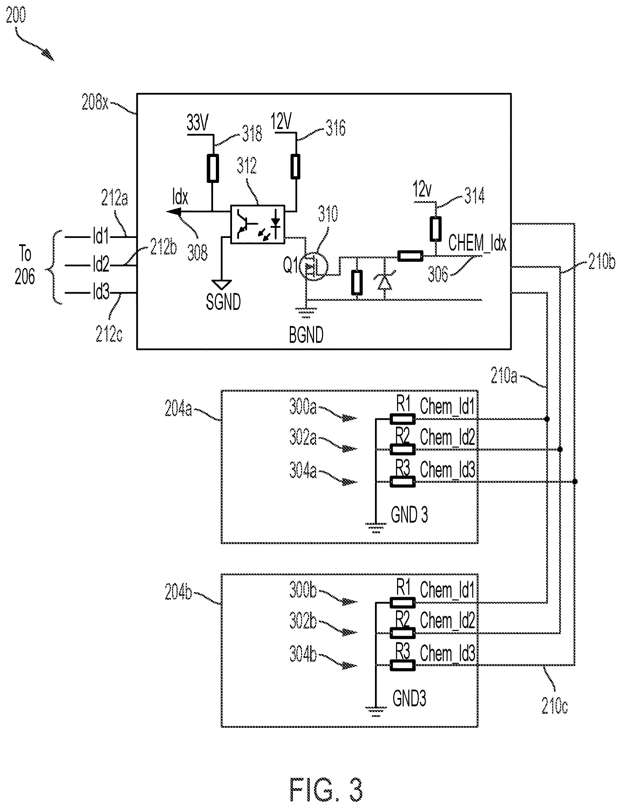

The control circuitry 202 includes processing circuitry 206, a first battery-identification circuit 208a, a second battery-identification circuit 208b, and a third battery-identification circuit 208c. The first battery-identification circuit 208a, the second battery-identification circuit 208b, and the third battery-identification circuit 208c may be collectively referred to as battery-identification circuits 208a-208c or battery-identification circuitry 208a-208c. The processing circuitry 206 may include, for example, one or more microprocessors and/or one or more digital-signal processors (DSPs). The battery-identification circuit 208a-208n may each include circuitry to receive identifying energy-storage-device information from the batteries 204a, 204b and provide an output signal indicative thereof to the processing circuitry 206, as discussed in greater detail below with respect to FIG. 3.

The first battery-identification circuit 208a is coupled to the first battery 204a and the second battery 204b via a first battery communication connection 210a, and is coupled to the processing circuitry 206 via a first processing communication connection 212a. The second battery-identification circuit 208b is coupled to the first battery 204a and the second battery 204b via a second battery communication connection 210b, and is coupled to the processing circuitry 206 via a second processing communication connection 212b. The third battery-identification circuit 208c is coupled to the first battery 204a and the second battery 204b via a third battery communication connection 210c, and is coupled to the processing circuitry 206 via a third processing communication connection 212c.

The first battery 204a includes at least one first resistor 214a, and the second battery 204b includes at least one second resistor 214b. In at least one example, the at least one first resistor 214a and the at least one second resistor 214b each include three resistors, each of which is coupled to a respective one of the battery communication connections 210a-210c. Each resistor of the resistors 214a, 214b may have a low-resistance value or a high-resistance value. The low-resistance values may be, for example, equivalent to a short circuit, and the high-resistance value may be, for example, equivalent to an open circuit.

A combination of resistance values may be indicative of the type and capacity of the respective battery. A low-resistance value may correspond to a logical LOW value and a high-resistance value may correspond to a logical HIGH value. In this manner, a combination of resistance values may be used to establish a binary identifier of a type and capacity of the respective battery.

In various examples, the at least one first resistor 214a and the at least one second resistor 214b include the same number of resistors. The number of resistors may be selected depending on how many combinations of types and capacities of batteries are implemented. Increasing a number of resistors (and thus binary digits) increases a number of possible binary codes. For purposes of explanation, an example is provided in which three combinations of types and capacities are provided: a VLRA type battery with 7.5 Ah capacity, a VLRA type battery with 9 Ah capacity, and a lithium-ion type battery. For purposes of this example, lithium-ion batteries are provided with only a single capacity, which is therefore left unspecified; however, in other examples, lithium-ion batteries with multiple different capacities may be implemented. In this example, each of the resistors 214a, 214b includes three resistors (for a total of six resistors). In other examples, the combinations of types and capacities may be different, and the number of resistors of the resistors 214a, 214b may be changed accordingly.

Each resistor of the resistors 214a, 214b is coupled to a respective one of the battery communication connections 210a. For example, if each of the resistors 214a, 214b includes three resistors, then a first resistor of the at least one first battery 204a and a first resistor of the at least one second battery 204b may each be coupled to the first battery communication connection 210a, a second resistor of the at least one first battery 204a and a second resistor of the at least one second battery 204b may each be coupled to the second battery communication connection 210b, and a third resistor of the at least one first battery 204a and a third resistor of the at least one second battery 204b may each be coupled to the third battery communication connection 210c.

As discussed above, the resistors 214a, 214b may include fewer than or more than three resistors in other examples, and the battery communication connections 210a-210c may include a corresponding number of connections. For example, if the resistors 214a, 214b each include two resistors, then two battery communication connections may be implemented, and if the resistors 214a, 214b each include four resistors, then four battery communication connections may be implemented, and so forth.

Each of the battery communication connections 210a-210c may provide a signal indicative of the values of the connected resistors 214a, 214b to a respective one of the battery-identification circuits 208a-208c. As discussed in greater detail below, a logical LOW signal may indicate that at least one of the two resistors connected to the battery communication connection 210a-210c is a low-resistance value, and a logical HIGH signal may indicate that both of the two resistors connected to the battery communication connection 210a-210c is a high-resistance value. Each of the battery-identification circuits 208a-208c may process the received signal and output a respective identification signal to the processing circuitry 206. The processing circuitry 206 may use the received identification signals to determine a type and/or capacity of connected batteries.

FIG. 3 illustrates a schematic diagram of an example of the battery-identification system 200. For ease of illustration, a single example of battery-identification circuit 208x is illustrated. The battery-identification circuit 208x may be an example of any of the battery-identification circuits 208a-208c. Although only a single instance of the battery-identification circuit 208x is shown for clarity of illustration, in various examples, the battery-identification system 200 may include three battery-identification circuits 208a-208c, with each one coupled to a respective one of the battery communication lines 210a-210c.

The first battery 204a includes a first resistor 300a, a second resistor 302a, and a third resistor 304a. The second battery 204b includes a first resistor 300b, a second resistor 302b, and a third resistor 304b. The battery-identification circuit 208x includes an input node 306, an output node 308, a switching device 310, a light-emitting diode (LED) switching device 312, a first voltage node 314, a second voltage node 316, and a third voltage node 318. The LED switching device 312 includes an LED and a light-actuated switch. The LED is coupled in series between the switching device 310 and the second voltage node 316 and is optically coupled to (that is, emits light to) the light-actuated switch. The light-actuated switch is coupled in series between the third switching node 318 and a reference node.

The first resistor 300a is coupled to a reference node (for example, a neutral reference node) at a first connection and is coupled to the first battery communication connection 210a at a second connection. The second resistor 302a is coupled to a reference node (for example, a neutral reference node) at a first connection and is coupled to the second battery communication connection 210b at a second connection. The third resistor 304a is coupled to a reference node (for example, a neutral reference node) at a first connection and is coupled to the third battery communication connection 210c at a second connection.

The first resistor 300b is coupled to a reference node (for example, a neutral reference node) at a first connection and is coupled to the first battery communication connection 210a at a second connection. The second resistor 302b is coupled to a reference node (for example, a neutral reference node) at a first connection and is coupled to the second battery communication connection 210b at a second connection. The third resistor 304b is coupled to a reference node (for example, a neutral reference node) at a first connection and is coupled to the third battery communication connection 210c at a second connection.

Each of the battery communication connections 210a-210c is configured to be coupled to a respective input node of respective instances of the battery-identification circuit 208x. As discussed above, although one instance of the battery-identification circuit 208x is illustrated for ease of illustration, in various examples the battery-identification system 200 may include three instances of the battery-identification circuit 208x. In various examples, each of the battery communication connections 210a-210c may be coupled to a respective instance of the battery-identification circuit 208x at a corresponding input node 306. For example, the first battery communication connection 210a may be coupled to the input node 306.

As discussed above, each of the resistors 300a, 300b, 302a, 302b, 304a, 304b may be substantially equivalent to a short circuit or an open circuit. For example, suppose that either or both of the first resistor 300a and the first resistor 300b are low-resistance resistors approximately equal to a short circuit. In this example, the input node 306 may be coupled to the reference node of the respective battery via the first battery communication connection 210a and whichever of the resistors 300a, 300b is equivalent to a short circuit, even if one of the resistors 300a, 300b is equivalent to an open circuit. The voltage at the input node 306 may thus be approximately 0 V. A voltage at the input node 306 may be applied to a control connection of the switching device 310, which may cause the switching device 310 to remain open. No current conducts through the open switching device 310, and thus no current passes through the LED of the LED switching device 312. The light-actuated switch of the LED switching device 312 remains open because the LED is not activated, and thus the voltage at the third voltage node 318 may be applied to the output node 308. The output node 308 may therefore have a high-voltage value approximately equal to a voltage on the third voltage node 318 (for example, 3.3 V), which may correspond to a logical HIGH value.

The logical HIGH value may then be output on the output node 308, which couples to the first processing communication connection 212a. The logical HIGH value may be provided to the processing circuitry 206. The processing circuitry 206 may receive output signals from each of the multiple instances of the battery-identification circuit 208x via the processing communication connections 212a-212c, and the processing circuitry 206 may determine what combination of battery types and capacities make up the batteries 204a, 204b based on the three output signals.

Accordingly, if one or both of the resistors 300a, 300b are low-resistance resistors approximately equal to a short circuit, the output node 308 of a corresponding instance of the battery-identification circuit 208x may be a logical HIGH value. Conversely, if both of the resistors 300a, 300b are high-resistance resistors approximately equal to an open circuit, then the input node 306 may not be connected to a reference node via the resistors 300a, 300b. Instead, the first voltage node 314 applies its voltage to the input node 306. Accordingly, rather than being at a low voltage value tied to the reference node, the input node 306 may be at a high voltage value (for example, 12 V) dictated by the first voltage node 314.

The high-voltage value at the input node 306 may be applied to the control connection of the switching device 310, thereby closing the switching device 310 and coupling the LED of the LED switching device 312 in series between the second voltage node 316 and a reference node. Current passes from the second voltage node 316 to the reference node through the LED of the LED switching device 312, causing the LED to emit light and close the light-actuated switching device of the LED switching device 312. The light-actuated switching device of the LED switching device 312 closes, thereby coupling the output node 308 to a reference node via the switching device of the LED switching device 312. The output node 308 is thus at a low-voltage value, which may correspond to a logical LOW value. The logical LOW value is output from the output node 308 to the processing circuitry 206 via the first processing communication connection 212a.

Accordingly, if both of the resistors 300a, 300b are high-resistance resistors approximately equal to an open circuit, then a logical LOW value may be provided to the processing circuitry 206 via the first processing communication connection 212a. Although the foregoing examples are provided with respect to the first resistors 300a, 300b, the first battery communication connection 210a, and the first processing communication connection 212a, similar principles apply to the corresponding components 302a, 302b, 304a, 304b, 210b, 210c, 212b, 212c.

In this manner, the battery-identification circuit 208x may determine whether a connected resistor or resistors are open circuits or short circuits. Batteries may be implemented with a combination of low- and high-value resistors for each type and/or capacity. For example, the resistors 300a, 302a, 304a, may have one combination of values for a lithium-ion battery, may have a different combination of values for a 7.5 Ah-capacity VLRA, and may have yet a different combination of values for a 9 Ah-capacity VLRA.

Table 1, below, illustrates one example of battery configurations correlated to a combination of resistors. In other examples, different numbers and combination of resistor values may correspond to a different number of batteries with the same or different types and capacities. As discussed in greater detail below, Table 1 provides an example in which the batteries 204a, 204b are the same type and capacity of battery.

**Table 1: Configurations for Battery Chemistry Detection (Same Batteries)**

| Type of Battery | Output Node Logical Value | | | Voltage on Input Node | | | Configuration resistors | | |
|---|---|---|---|---|---|---|---|---|---|
| | Id3 | Id2 | Id1 | CHEM_ID3 | CHEM_ID2 | CHEM_ID1 | R3 | R2 | R1 |
| No Connection | 0 | 0 | 0 | 12V | 12V | 12V | Open | Open | Open |
| VRLA 9 Ah | 0 | 1 | 0 | 12V | 0V | 12V | Open | 0 Ω | Open |
| VRLA 7.5 Ah | 1 | 1 | 0 | 0V | 0V | 12V | 0 Ω | 0 Ω | Open |
| Li-ion | 0 | 0 | 1 | 12V | 12V | 0V | Open | Open | 0 Ω |

In Table 1, R1 may refer to a resistance value of the first resistors 300a, 300b, R2 may refer to a resistance value of the second resistors 302a, 302b, and R3 may refer to a resistance value of the third resistors 304a, 304b. CHEM_ID1, CHEM_ID2, and CHEM_ID3 refer to a voltage on the battery communication connections 210a, 210b, 210c, respectively. Id1, Id2, and Id3 refer to a logical value on the processing communication connections 212a, 212b, 212c, respectively (and on each corresponding output node 308 of each of the three corresponding instances of the battery-identification circuit 208x). The processing circuitry 206 may receive the output signals Id1, Id2, Id3 and determine a type and capacity of the batteries 204a, 204b based on the output signals.

In some instances, the batteries 204a, 204b may not be the same type or capacity of batteries. As illustrated in Table 2, a mix of a lithium-ion battery and a VLRA battery of either capacity corresponds to a unique combination of Id1, Id2, and Id3 values as compared to Table 1. Accordingly, the processing circuitry 206 may uniquely identify when the batteries 204a, 204b include a lithium-ion battery and a VLRA battery. Conversely, the combination of Id1, Id2, and Id3 values for a 7.5 Ah-capacity VLRA battery and a 9 Ah-capacity VLRA battery may be the same as the combination of Id1, Id2, and Id3 values (that is, 0, 1, 1) for two 7.5 Ah-capacity VLRA batteries with no 9 Ah-capacity VLRA battery. The processing circuitry 206 (and the UPS in which the processing circuitry 206 is implemented) may therefore interface with a combination of 7.5 Ah-capacity and 9 Ah-capacity VLRA batteries in the same manner as a group of only 7.5 Ah-capacity VLRA batteries, as discussed in greater detail below.

**Table 2: Detection of Mix of Batteries**

| Type of Battery | Output Node Logical Value | | | Input Node Voltage | | |
|---|---|---|---|---|---|---|
| | Id3 | Id2 | Id1 | CHEM_ID3 | CHEM_ID2 | CHEM_ID1 |
| Mix of Li & LA 9Ah | 0 | 1 | 1 | 12V | 0V | 0V |
| Mix of Li & LA 7.5Ah | 1 | 1 | 1 | 0V | 0V | 0V |
| Mix of 9Ah and 7.5Ah | 1 | 1 | 0 | 0V | 0V | 12V |

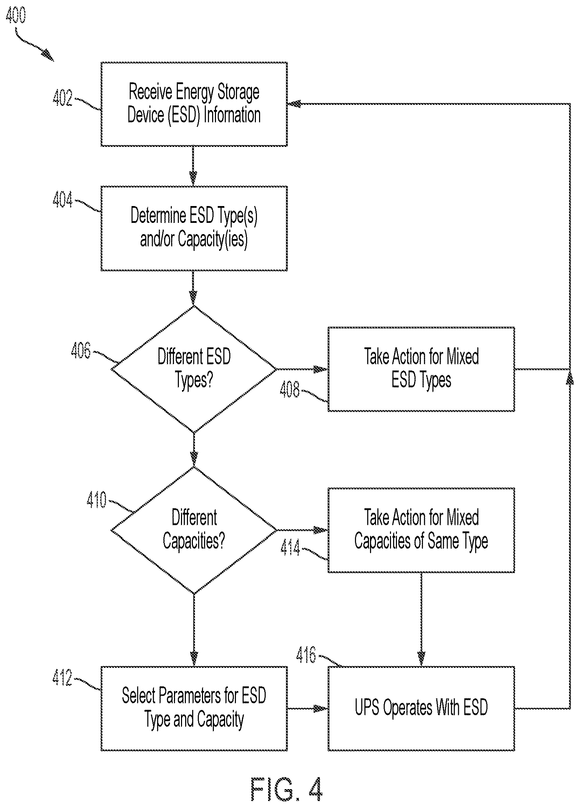

FIG. 4 illustrates a process 400 of interfacing with a group of energy-storage devices according to an example. The process 400 may be executed at least in part by the processing circuitry 206 which may, in some examples, include one or more microprocessors. As discussed above, the processing circuitry 206 may be a component of one or more controllers, such as the controller 112; accordingly, the process 400 may also be understood to be executed by the controller 112. For purposes of example, the description of the process 400 is provided with respect to the example of FIGS. 2 and 3.

At act 402, the processing circuitry 206 receives energy-storage-device (ESD) information. For example, the ESD information may include the output signals Id1, Id2, and Id3 from the processing communication connections 212a, 212b, 212c. In other examples in which more than or fewer than three output signals are present (for example, because there are more than or fewer than three resistors, the number of which may be dictated by the number of combinations of battery types and capacities), act 402 may include receiving a corresponding number of output signals. As discussed above, the output signals (for example, Id1, Id2, and Id3) may include a logical HIGH or LOW value determined and output by corresponding battery-identification circuitry.

At act 404, the processing circuitry 206 determines a type and/or capacity of one or more connected batteries based on the ESD information. As discussed above, each combination of binary values for the output signals Id1, Id2, and Id3 may correspond to a combination of a battery type and capacity. For example, as shown in Table 1 above using the order (Id3, Id2, Id1), the value (0, 1, 0) may correspond to all of one or more batteries coupled to the battery-identification circuitry 208x being 9 Ah-capacity VLRA batteries. As shown in Table 2, the value (0, 1, 1) may correspond to a combination of lithium-ion batteries and 9 Ah-capacity VLRA batteries. As shown in Tables 1 and 2, the value (1, 1, 0) may correspond to either only 7.5 Ah-capacity VLRA batteries or a combination of 7.5 Ah-capacity and 9 Ah-capacity VLRAs. Similar principles apply to the other shown output-signal values.

At act 406, the processing circuitry 206 determines whether the batteries include multiple different battery types, such as a combination of lithium-ion and VLRA batteries. If the processing circuitry 206 determines that the batteries 204a, 204b include multiple different types of batteries (406 YES), then the process 400 continues to act 408.

At act 408, the processing circuitry 206 takes one or more actions based on the connected batteries being of different types. As discussed above, battery parameters may be different for different battery types. The battery parameters for one type of battery, such as charging profile, low-voltage discharge cutoff, charging voltage, and so forth, may not be compatible with battery parameters for another type of battery. Accordingly, act 408 may include discontinuing or not beginning any charging or discharging operations. For example, the processing circuitry 206 may control the UPS 100 to not exchange any power with the energy-storage devices 126. In some examples, the processing circuitry 206 may also output one or more alerts, such as by sending a communication (for example, an e-mail message, a smartphone-application notification, a text message, and so forth) to a user, by illuminating a service light on the UPS 100, by outputting a sound or audio message, and/or by taking some other action or combination of actions.

The process 400 then returns to act 402, and acts 402-408 may be repeated until act 406 yields a different determination (for example, because a user has swapped out one or more batteries such that all batteries are of the same type). If the processing circuitry 206 determines that all connected batteries are of the same type (406 NO), then the process 400 continues to act 410.

In some examples, at act 410, the processing circuitry 206 determines whether the connected batteries of the same type have the same or different capacities. In various examples, the ESD information for only lower-capacity batteries may be different from the ESD information for a combination of lower- and higher-capacity batteries. Accordingly, in some examples, act 410 may include the processing circuitry 206 affirmatively determining whether the connected batteries have the same or different capacities.

As discussed above with respect to Tables 1 and 2, however, in some examples the ESD information for a group of lower-capacity batteries may be the same as the ESD information for a combination of lower-capacities batteries and higher-capacity batteries of the same type (for example, indicated by a value of [1, 1, 0] in Tables 1 and 2). In some examples, therefore, act 410 not actually be an act affirmatively executed by the processing circuitry 206, and is provided for purposes of explaining acts 412 and 414, below. Act 410 may therefore be understood to include both examples in which the processing circuitry 206 does and does not affirmatively determine the presence or absence of mixed capacities. If the connected batteries all have the same capacity (410 NO), then the process 400 continues to act 412.

At act 412, the processing circuitry 206 selects a battery profile indicative of one or more battery parameters for the identified battery type and capacity. For example, if the battery type is a lithium-ion battery (with an unspecified capacity), then the processing circuitry 206 selects a battery profile for a lithium-ion battery. The processing circuitry 206 may retrieve the lithium-ion battery profile from memory, for example, from the memory and/or storage 118. As discussed above, battery parameters may include, for example, a charging profile, a low-battery cutoff voltage, a charging voltage, and any other parameters that may relate to or dictate how a UPS (for example, the UPS 100) receives power from, or provides power to, one or more energy-storage devices (for example, the energy-storage devices 126).

At act 416, a UPS in which the processing circuitry 206 is implemented (for example, the UPS 100) operates with the connected energy-storage devices (for example, the energy-storage devices 126) pursuant to the selected battery profile. For example, the UPS 100 may charge or discharge the energy-storage devices 126 in accordance with the battery parameters specified by the corresponding battery profile. The process 400 may then return to act 402.

Returning to act 410, if the connected batteries have different capacities (410 YES), then the process 400 continues to act 414.

At act 414, the processing circuitry 206 takes one or more actions based on the connected batteries being of mixed capacities. In various examples, including examples in which the processing circuitry ESD information is the same for lower-capacity batteries and a combination of lower- and higher-capacity batteries, act 414 may include the processing circuitry 206 selecting a battery profile specifying one or more battery parameters for the lower- (or lowest-) capacity battery of the connected batteries. For example, suppose that a 7.5 Ah-capacity and a 9 Ah-capacity VLRA battery are connected to the UPS 100. The processing circuitry 206 may select a battery profile for the 7.5 Ah-capacity battery and may interact with the 7.5 Ah-capacity and 9 Ah-capacity using the 7.5 Ah-capacity-battery profile accordingly. Although the 9 Ah-capacity VLRA battery may only be charged to 7.5 Ah, the UPS 100 may still interface with the batteries of different capacities.

In other examples, other actions may be action in addition to, or in lieu of, selecting a battery profile for a lowest-capacity battery. For example, the UPS 100 may provide an alert to a user, and/or may take similar actions as in act 408, such as by discontinuing exchanging power with the connected batteries. The process 400 then returns to act 402.

In various examples, the acts 402-416 of the process 400 may be illustrated and described as discrete, affirmative acts for purposes of explanation only. For example, although acts 406 and 410 are depicted as separate determinations, in various examples the processing circuitry 206 may simultaneously execute acts 406 and 410. That is, the processing circuitry 206 may determine the battery types and/or capacities at act 404 and may automatically take action in response (in accordance with acts 408, 412, 414, and/or 416) without affirmatively executing acts 406 and 410.

Accordingly, in various examples, the battery-identification circuitry 208a-208c may determine ESD information indicative of the connected batteries and provide the ESD information to the processing circuitry 206, and the processing circuitry 206 may control the UPS 100 to interact accordingly with the connected batteries. For example, the processing circuitry 206 may select a battery profile to dictate how to interface with the connected batteries, such as by specifying a charging profile, a rated discharge power, a rated low-battery cutoff voltage, communication-protocol information, runtime prediction, state-of-charge (SoC) estimation parameters, state-of-health (SoH) estimation parameters, and so forth. The UPS 100 may then interact with the connected batteries pursuant to the battery parameters specified by the battery profile.

For ease of explanation, examples have been provided in which there are two batteries connected to the UPS 100. However, the principles of the disclosure are applicable to any number of batteries. A number of configuration resistors (and thus battery communication connections, battery-identification circuitries, and processing communication connections) may be increased accordingly, but the principles of the disclosure may remain unchanged.

As discussed above, various actions may be taken depending on whether the connected batteries are the same or different types and/or capacities. Various combinations of actions may be taken in response to various combinations of types and/or capacities. For example, as discussed above, in some examples the UPS 100 may suspend exchanging power with the energy-storage devices 126 responsive to determining that the energy-storage devices 126 include batteries of multiple different types. In other examples, one or more of the energy-storage devices 126 may be selectively disconnected. For example, the energy-storage-device interface 110 may include one or more switching devices to disconnect a corresponding energy-storage device until batteries of only one type are connected to the UPS 100.

In various examples discussed above, the control circuitry 202 may be used to determine a type and capacity of connected batteries. In other examples, the control circuitry 202 may be used to determine at least one of the type or capacity of the connected batteries, that is, only a type of the connected batteries, only a capacity of the connected batteries, and/or both a type and capacity of the connected batteries.

Various controllers, such as the controller 112, may execute various operations discussed above. The controller 112 may also execute one or more instructions stored on one or more non-transitory computer-readable media, which the controller 112 may include and/or be coupled to, which may result in manipulated data. The non-transitory computer-readable media may include memory and/or storage. In some examples, the controller 112 may include one or more processors or other types of controllers. In one example, the controller 112 is or includes at least one processor. In another example, the controller 112 performs at least a portion of the operations discussed above using an application-specific integrated circuit tailored to perform particular operations in addition to, or in lieu of, a processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

The present disclosure may also relate to the following embodiments:
Embodiment 1. An uninterruptible power supply (UPS) system comprising:
   at least one energy-storage-device interface configured to be coupled to a plurality of batteries;
   battery-identification circuitry configured to be coupled to the plurality of batteries, the battery-identification circuitry being further configured to:
      receive a plurality of output signals from the plurality of batteries;
      determine energy-storage-device information indicative of at least one battery type of the plurality of batteries based on the plurality of output signals received from the plurality of batteries, and
      output the energy-storage-device information; and
   processing circuitry configured to:
      receive the energy-storage-device information, and
      select a battery profile indicative of one or more battery parameters based on the energy-storage-device information.
Embodiment 2. The UPS system of embodiment 1, wherein the at least one battery type includes a plurality of battery types.
Embodiment 3. The UPS system of embodiment 2, wherein the plurality of battery types includes lithium-ion batteries and valve-regulated lead-acid batteries.
Embodiment 4. The UPS system of embodiment 2, wherein the processing circuitry is further configured to control the UPS to suspend charging and discharging the plurality of batteries responsive to determining that the at least one battery type includes the plurality of battery types.
Embodiment 5. The UPS system of embodiment 1, wherein the processing circuitry is further configured to:
   determine, based on the energy-storage-device information, that the plurality of batteries includes only a single battery type; and
   control the UPS to charge and/or discharge the plurality of batteries responsive to determining that the plurality of batteries includes only the single battery type.
Embodiment 6. The UPS system of embodiment 5, wherein the processing circuitry is configured to control the UPS to charge and/or discharge the plurality of batteries based on the one or more battery parameters.
Embodiment 7. The UPS system of embodiment 1, wherein the one or more battery parameters include one or more of a battery charging profile, a rated discharge power, or a rated low-battery cutoff voltage.
Embodiment 8. The UPS system of embodiment 1, wherein the energy-storage-device information is indicative of a respective capacity of each battery of the plurality of batteries.
Embodiment 9. The UPS system of embodiment 8, wherein the plurality of batteries include a plurality of different capacities.
Embodiment 10. The UPS system of embodiment 9, wherein the processing circuitry is further configured to:
   select the battery profile corresponding to a lowest-capacity battery of the plurality of batteries; and
   control the UPS to charge and/or discharge the plurality of batteries based on the selected battery profile.
Embodiment 11. The UPS system of embodiment 1, wherein the battery-identification circuitry includes a plurality of battery-identification circuits.
Embodiment 12. The UPS system of embodiment 11, wherein each battery-identification circuit is coupled to a plurality of configuration resistors in the plurality of batteries.
Embodiment 13. The UPS system of embodiment 12, wherein each battery-identification circuit is configured to output an output signal of the plurality of output signals indicative of resistance values of the plurality of configuration resistors.
Embodiment 14. The UPS system of embodiment 13, wherein the processing circuitry is configured to determine the at least one battery type based on the plurality of output signals.
Embodiment 15. At least one non-transitory computer-readable medium storing thereon sequences of computer-executable instructions for controlling an uninterruptible power supply (UPS) configured to be coupled to a plurality of batteries, the sequences of computer-executable instructions including instructions that instruct at least one processor to:
   receive a plurality of output signals from the plurality of batteries;
   determine energy-storage-device information indicative of at least one battery type of the plurality of batteries based on the plurality of output signals received from the plurality of batteries; and
   select a battery profile indicative of one or more battery parameters based on the energy-storage-device information.
Embodiment 16. The at least one non-transitory computer-readable medium of embodiment 15, wherein the at least one battery type includes a plurality of battery types.
Embodiment 17. The at least one non-transitory computer-readable medium of claim 16, wherein the instructions further instruct the at least one processor to suspend charging and discharging the plurality of batteries responsive to determining that the at least one battery type includes the plurality of battery types.
Embodiment 18. The at least one non-transitory computer-readable medium of embodiment 15, wherein the energy-storage-device information is indicative of a respective capacity of each battery of the plurality of batteries.
Embodiment 19. A method of controlling an uninterruptible power supply (UPS) configured to be coupled to a plurality of batteries, the method comprising:
   receiving a plurality of output signals from the plurality of batteries;
   determining energy-storage-device information indicative of at least one battery type of the plurality of batteries based on the plurality of output signals received from the plurality of batteries; and
   selecting a battery profile indicative of one or more battery parameters based on the energy-storage-device information.
Embodiment 20. The method of embodiment 19, wherein the at least one battery type includes a plurality of battery types, the method further comprising suspending charging and discharging the plurality of batteries responsive to determining that the at least one battery type includes the plurality of battery types.

Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

## Claims

1. An uninterruptible power supply (UPS) system comprising:
at least one energy-storage-device interface configured to be coupled to a plurality of batteries;
battery-identification circuitry configured to be coupled to the plurality of batteries, the battery-identification circuitry being further configured to:
receive a plurality of output signals from the plurality of batteries;
determine energy-storage-device information indicative of at least one battery type of the plurality of batteries based on the plurality of output signals received from the plurality of batteries, and
output the energy-storage-device information; and
processing circuitry configured to:
receive the energy-storage-device information, and
select a battery profile indicative of one or more battery parameters based on the energy-storage-device information.

2. The UPS system of claim 1, wherein the at least one battery type includes a plurality of battery types, wherein, in particular, the plurality of battery types includes lithium-ion batteries and valve-regulated lead-acid batteries.

3. The UPS system of claim 2, wherein the processing circuitry is further configured to control the UPS to suspend charging and discharging the plurality of batteries responsive to determining that the at least one battery type includes the plurality of battery types.

4. The UPS system of any one of the preceding claims, wherein the processing circuitry is further configured to:
determine, based on the energy-storage-device information, that the plurality of batteries includes only a single battery type; and
control the UPS to charge and/or discharge the plurality of batteries responsive to determining that the plurality of batteries includes only the single battery type, wherein, in particular, the processing circuitry is configured to control the UPS to charge and/or discharge the plurality of batteries based on the one or more battery parameters.

5. The UPS system of any one of the preceding claims, wherein the one or more battery parameters include one or more of a battery charging profile, a rated discharge power, or a rated low-battery cutoff voltage.

6. The UPS system of any one of the preceding claims, wherein the energy-storage-device information is indicative of a respective capacity of each battery of the plurality of batteries.

7. The UPS system of claim 6, wherein the plurality of batteries include a plurality of different capacities, wherein, in particular, the processing circuitry is further configured to:
select the battery profile corresponding to a lowest-capacity battery of the plurality of batteries; and
control the UPS to charge and/or discharge the plurality of batteries based on the selected battery profile.

8. The UPS system of any one of the preceding claims, wherein the battery-identification circuitry includes a plurality of battery-identification circuits.

9. The UPS system of claim 8, wherein each battery-identification circuit is coupled to a plurality of configuration resistors in the plurality of batteries.

10. The UPS system of claim 9, wherein each battery-identification circuit is configured to output an output signal of the plurality of output signals indicative of resistance values of the plurality of configuration resistors, wherein, in particular, the processing circuitry is configured to determine the at least one battery type based on the plurality of output signals.

11. At least one non-transitory computer-readable medium storing thereon sequences of computer-executable instructions for controlling an uninterruptible power supply (UPS) configured to be coupled to a plurality of batteries, the sequences of computer-executable instructions including instructions that instruct at least one processor to:
receive a plurality of output signals from the plurality of batteries;
determine energy-storage-device information indicative of at least one battery type of the plurality of batteries based on the plurality of output signals received from the plurality of batteries; and
select a battery profile indicative of one or more battery parameters based on the energy-storage-device information.

12. The at least one non-transitory computer-readable medium of claim 11, wherein the at least one battery type includes a plurality of battery types, wherein, in particular, the instructions further instruct the at least one processor to suspend charging and discharging the plurality of batteries responsive to determining that the at least one battery type includes the plurality of battery types.

13. The at least one non-transitory computer-readable medium of any one of the claims 11 to 12, wherein the energy-storage-device information is indicative of a respective capacity of each battery of the plurality of batteries.

14. A method of controlling an uninterruptible power supply (UPS) configured to be coupled to a plurality of batteries, the method comprising:
receiving a plurality of output signals from the plurality of batteries;
determining energy-storage-device information indicative of at least one battery type of the plurality of batteries based on the plurality of output signals received from the plurality of batteries; and
selecting a battery profile indicative of one or more battery parameters based on the energy-storage-device information.

15. The method of claim 14, wherein the at least one battery type includes a plurality of battery types, the method further comprising suspending charging and discharging the plurality of batteries responsive to determining that the at least one battery type includes the plurality of battery types.
